# EUROPEAN PATENT SPECIFICATION

(11) **EP 0 278 136 B1**
(45) Date of publication and mention of the grant of the patent: **29.09.1993**
(21) Application number: 87301136.5
(22) Date of filing: 10.02.1987
(51) Int. Cl.: C08L 25/12, C08L 35/06

(54) **Thermoplastic composition on the basis of a copolymer of a vinylaromatic compound and a vinylcyanide**
Thermoplastische Zusammensetzung aus Copolymeren von vinylaromatischen Verbindungen und Vinylcyanid
Composition thermoplastique à base de copolymère de composés vinyl aromatique et de cyanure de vinyle

(43) Date of publication of application: 17.08.1988
(73) Proprietor: DSM N.V., 6411 TE Heerlen (NL)
(72) Inventor: Reid, Valerie M. G., Stirling FK9 4LA Scotland (GB); Cowie, Ian M. G., Stirling FK9 4LA Scotland (GB); Roerdink, Eize, NL-6191 GD Beek (L) (NL)

(56) References cited:
- BE-A- 664 075
- US-A- 4 504 627

## Description

Thermoplastic composition on the basis of a copolymer of a vinylaromatic compound and a vinylcyanide.

It is generally known that two (co)polymers are not often homogeneously miscible. With polymer mixtures, de-mixing occurs as a rule, while homogeneous mixing is exceptional. Consequently, only few homogeneous polymer-polymer mixtures are known. Some examples of homogeneous polymer-polymer mixtures are polyphenylene oxide and polystyrene, polyvinyldifluoride and polymethylmethacrylate, and polyvinylchloride and poly-ε-caprolactam. Styreneacrylonitrile copolymers are widely used as a starting material in plastics processing. A drawback of SAN is that its glass temperature (Tg) is too low. By mixing SAN with a (co)polymer having a much higher Tg, the HDT can be improved. This is only possible, however, if a mixture of good homogeneity can be obtained.

In US-A-4.504.627 a composition on the basis of two polymers is described. N-phenylmaleimide with methylmethacrylate is mixed with a copolymer of styrene and acrylonitrile (SAN).

In EP-A-136.909 a blend of s copolymer of N-phenylmaleimide and methylmethacrylate and a copolymer of styrene maleic anhydride, with optionally SAN added, is described.

EP-A-49.103 mentions N-substituted alkylmaleimides and methylmethacrylate copolymers to which a polyamide is added, mixed with a copolymer such as SAN.

The object of the invention therefore is to provide a homogeneous polymer mixture on the basis of SAN, which permits to obtain a higher HDT.

This object is characterized according to the invention in that the composition contains:
A. 1-99 wt.% of a copolymer containing 5-65 mole% N-substituted itaconimide and 35-95 mole%
B. 99-1 wt.% of a copolymer containing 60-80 wt.% vinylaromatic compound and 20-40 wt.% vinylcyanide.

Surprisingly, it has been found that the copolymers are excellently homogeneously miscible and that, depending on the copolymer quantities used, an augmented Tg is found.

The imide-compounds of copolymer A being N-substituted itaconimide can be represented by the following structure formula: 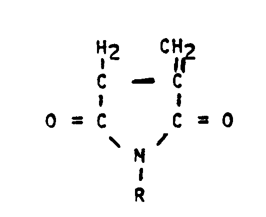
where R can be a hydrogen, an alkyl group, an alkylene group, a cycloalkyl or an aryl group. Examples are N-methylitaconimide, N-cyclohexylitaconimide, N-phenylitaconimide and Preferably, N-phenylitaconimide is used in the invention.

The preparation of N-phenylitaconimide has been described by T. Oshi, Polymer Journal, Vol. 12, No. 10, pp. 719-727 (1980).

The alkylacrylate monomer preferably is methylmethacrylate. The copolymerization of N-phenylcitraconimide and methylmethacrylate has been described by T. Oshi, Polymer Journal, Vol. 12, No. 11, pp. 799-807 (1980). Copolymerization of N-phenylitaconimide and methylmethacrylate can be effected identically.

Applicable styrene and/or α-methylstyrene copolymers are the known SAN and/or α-MSAN copolymers. These copolymers can be prepared by the customary method, for instance by emulsion polymerization, mass polymerization and suspension polymerization or a combination of these. The copolymers are high-molecular and have acrylonitrile concentrations of 20-40 wt.%. They may contain small quantities of other comonomers, such as acrylates.

To blend the two copolymers, they are first dissolved in acetone. Next, the blend thus obtained is precipitated by means of methanol and then washed and dried. Another possibility is to pour out the solution, dry it at a temperature above the Tg of the imide copolymer (> 240¤C) and press the film thus obtained. A third possibility is to mix the polymer in a mechanical mixing device, for instance Brabender, or a roller at a temperature above the Tg of the imide copolymer.

The applicant has also found that if the copolymer of N-phenylitaconimide-MMA contains more than 65 mole % imide, two separate phases are formed and no homogeneity is obtained. Below 5 mole % imide, homogeneity is obtained, but the effect of an increased Tg is too small to be determined with conventional equipment, such as a differential scanning calorimeter (DSC). The copolymer of N-substituted itaconimide-MMA preferably contains 30-60 mole% N-substituted itaconimide.

The usual additives can be incorporated in the polymer composition, such as UV stabilizers, antioxidants, pigments, flame retardants and fillers.

The composition according to the invention is highly suitable for manufacture of large objects by means of injection moulding. Also for injection-moulded objects requiring high precision the composition is highly suitable, due to the increased Tg.

The invention will now be elucidated with the following non-restrictive examples.

### Example 1

An N-phenyitaconimide-methylmethacrylate (PHITIM-MMA) with an imide content of 22 mole %, obtained in accordance with the recipe as described by T. Oshi, Polymer Journal, Vol. 12, 10, pp. 719-727 (1980) and Polymer Journal, Vol. 12, 11, pp. 799-807 (1980), was mixed, through melting, with a styrene-acrylonitrile copolymer with an acrylonitrile content of 27 wt.%.
The Tg of the polymer mixture thus obtained was determined with a differential scanning calorimeter (DSC, Perkin Elmer II) with a heating rate of 20¤C/min.
The values thus found are given in Table 1 in relation with the quantities (wt.%) of N-phenylitaconimide-MMA used relative to SAN.
The Tg values found were sharply defined, the transition tempeature ranges were smaller than 9¤C in all cases, which indicates good homogeneity.

**TABLE 1**

| wt.% PHITIM-MMA | Tgₘᵢₓₜᵤᵣₑ ¤C |
|---|---|
| 25 | 115 |
| 50 | 121 |
| 60 | 124 |
| 70 | 127 |
| 80 | 132 |

### Example 2

Identical to example 1, but now the imide content of PHITIM-MMA is 33 mole %.

**TABLE 2**

| wt.% PHITIM-MMA | Tgₘᵢₓₜᵤᵣₑ ¤C |
|---|---|
| 40 | 118 |
| 50 | 120 |
| 60 | 124 |

### Example 3

Identical to example 1 but now the imide content of PHITIM-MMA is 39 mole %.

**TABLE 3**

| wt.% PHITIM-MMA | Tgₘᵢₓₜᵤᵣₑ ¤C |
|---|---|
| 25 | 117 |
| 35 | 121 |
| 50 | 126 |
| 60 | 130 |
| 75 | 138 |
| 85 | 143 |

### Example 4

Identical to example 1, but now the imide content of PHITIM-MMA is 43 mole %.

**TABLE 4**

| wt.% PHITIM-MMA | Tgₘᵢₓₜᵤᵣₑ ¤C |
|---|---|
| 20 | 118 |
| 40 | 127 |
| 50 | 132 |
| 60 | 138 |
| 80 | 151 |

### Example 5

Identical to example 1, but the imide content of PHITIM-MMA now is 60 mole %.

**TABLE 5**

| wt.% PHITIM-MMA | Tgₘᵢₓₜᵤᵣₑ ¤C |
|---|---|
| 25 | 121 |
| 50 | 136 |
| 60 | 144 |
| 75 | 159 |
| 85 | 172 |

### Example 6

Identical to example 1, but the imide content of PHITIM-MMA now is 62.5 mole %.

**TABLE 6**

| wt.% PHITIM-MMA | Tgₘᵢₓₜᵤᵣₑ ¤C |
|---|---|
| 25 | 116 |
| 50 | 126 |
| 75 | 147 |

### Example 7

Identical to example 4, but the acrylonitrile content of the styrene-acrylonitrile copolymer now is 39 wt.%.

**TABLE 7**

| wt.% PHITIM-MMA (43 mole % imide) | Tgₘᵢₓₜᵤᵣₑ ¤C |
|---|---|
| 25 | 122.5 |
| 50 | 131.5 |
| 75 | 144.7 |

### Comparative example I

Identical to example 7, but the acrylonitrile content of the styrene-acrylonitrile copolymer now is 15 wt.%.
Independent of the PHITIM-MMA weight percentage of the mixture, two Tg values are found, viz. Tg,1 = 108¤C and Tg,2 = 166¤C.
This shows that no homogeneous mixture was formed.
Tg,1 = Tg, SAN and Tg,2 = Tg, PHITIM-MMA, 43 mole % imide.

### Comparative example II

50 parts of N-phenylitaconimide-MMA with an imide content of 68 mole % were mixed through melting with 50 parts of SAN with an acrylonitrile content of 27 wt.%.

By means of a DSC two transition temperatures were determined: Tg,1 = 110¤C and Tg,2 = 227¤C. These values correspond with the Tg's of SAN and N-phenylitaconimide-MMA (68 mole % imide), respectively.
This shows that no homogenization took place.

### Comparative example III

50 parts of N-phenylitaconimide-MMA (68 mole % imide) were mixed through melting with 50 parts of SAN with an acrylonitrile content of 15 wt.%.
Two transrtion temperatures were found: Tg,1 = 108¤C and Tg,2 = 227¤C, corresponding with the Tg's of SAN (15 wt.% AN) and PHITIM-MMA (68 mole % imide), respectively.
This shows that no homogenization took place.

## Claims

1. Thermoplastic compositions on the basis of a copolymer of a vinylaromatic compound and vinylcyanide, characterized in that the composition contains:
A. 1-99 wt.% of a copolymer containing 5-65 mole% N-substituted itaconimide and 35-95 mole% alkylacrylate;
B. 99-1 wt.% of a copolymer containing 60-80 wt.% vinylaromatic compound and 20-40 wt.% vinylcyanide.

2. Composition according to claim 1, characterized in that copolymer A contains 30-60 mole% N-substituted itaconimide.

3. Composition according to claims 1-2, characterized in that copolymer A contains N-phenylitaconimide.

4. Composition according to claims 1-3, characterized in that copolymer B contains styrene and/or α-methylstyrene and acrylonitrile.

5. Object made in whole or in part of a copolymer composition according to claims 1-4.

## Patentansprüche

1. Thermoplastische Zusammensetzungen auf der Grundlage eines Copolymers einer vinylaromatischen Verbindung und Vinylcyanid, dadurch gekennzeichnet, daß die Zusammensetzung enthält:
A. 1-99 Gew.-% eines 5-65 Mol-% N-substituiertes Itaconimid und 35-95 Mol-% Alkylacrylat enthaltenden Copolymers;
B. 99-1 Gew.-% eines 60-80 Gew.-% vinylaromatische Verbindung und 20-40 Gew.-% Vinylcyanid enthaltenden Copolymers.

2. Zusammensetzung nach Anspruch 1, dadurch gekennzeichnet, daß Copolymer A 30-60 Mol-% N-substituiertes Itaconimid enthält.

3. Zusammensetzung nach Anspruch 1-2, dadurch gekennzeichnet, daß Copolymer A N-Phenylitaconimid enthält.

4. Zusammensetzung nach Anspruch 1-3, dadurch gekennzeichnet, daß Copolymer B Styrol und/oder α-Methylstyrol enthält.

5. Gegenstand, ganz oder teilweise hergestellt aus einer Copolymerzusammensetzung gemäß den Ansprüchen 1-4.

## Revendications

1. Compositions thermoplastiques à base d'un copolymère d'un composé vinylaromatique et de cyanure de vinyle, caractérisées en ce que la composition contient:
A. de 1 à 99% en poids d'un copolymère contenant de 5 à 65% en moles d'un itaconimide N-substitué et de 35 à 95% en moles d'acrylate d'alkyle ;
B. de 99% à 1% en poids d'un copolymère contenant de 60 à 80% en poids d'un composé vinylaromatique et de 20 à 40% en poids de cyanure de vinyle.

2. Composition selon la revendication 1, caractérisée en ce que le copolymère A contient de 30 à 60% en moles d'itaconimide N-substitué.

3. Composition selon les revendications 1 et 2, caractérisée en ce que le copolymère A contient du N-phénylitaconimide.

4. Composition selon les revendications 1 à 3, caractérisée en ce que le copolymère B contient du styrène et/ou alpha-méthylstyrène et de l'acrylonitrile.

5. Article fabriqué en totalité ou en partie en une composition polymère selon les revendications 1 à 4.
